# FASCICULE DE BREVET EUROPEEN

(11) **EP 0 979 183 B1**
(45) Date de publication et mention de la délivrance du brevet: **19.06.2002**
(21) Numéro de dépôt: 98917203.6
(22) Date de dépôt: 23.03.1998
(51) Int. Cl.: B60R 21/09, B60T 7/06

(54) **AGENCEMENT DE PEDALE POUR VEHICULE AUTOMOBILE**
PEDALANORDNUNG FÜR EIN KRAFTFAHRZEUG
MOTOR VEHICLE PEDAL ARRANGEMENT

(30) Priorité: 28.04.1997 FR 9705196
(43) Date de publication de la demande: 16.02.2000
(73) Titulaire: Bosch Systemes de Freinage, 93700 Drancy (FR)
(72) Inventeur: LEBOISNE, Cédric, F-75012 Paris (FR); ANTHERIEU, Frédéric, F-94120 Fontenay-sous-Bois (FR)
(86) Numéro de dépôt international: FR9800573
(87) Numéro de publication internationale: WO9849030

(56) Documents cités:
- WO-A-97/06036
- DE-A- 4 409 235

## Description

La présente invention concerne les agencements de pédales pour des véhicules automobiles en général, ces pédales étant destinées à commander divers organes tels que l'admission de gaz combustibles dans la chambre de combustion d'un moteur à explosion, un servomoteur pneumatique d'assistance au freinage ou un dispositif d'embrayage / débrayage.

Le renforcement des normes de sécurité auquel on assiste depuis plusieurs années en matière automobile a rendu nécessaire l'évolution des dispositifs de sécurité passive, destinés à éviter ou diminuer les conséquences d'un accident pour le conducteur et les passagers de ce véhicule. En ce qui concerne en particulier le conducteur du véhicule, ces dispositifs doivent être tels qu'un choc frontal ou oblique subi par le véhicule ne soit pas retransmis à la cheville ou à la jambe du conducteur, même si ce dernier appuie par exemple de tout son poids sur la pédale de frein.

De nombreux dispositifs ont été développées pour résoudre ce problème. On connaît, par exemple des documents DE-A-4 340 633 ou DE-A-4 409 324, des dispositifs dans lesquels un câble vient tirer vers le haut sur le levier de pédale de façon à déplacer ce levier en dehors son support et en dehors de l'emplacement normal du pied du conducteur du véhicule.

Une telle disposition a pour inconvénient que, si le conducteur du véhicule appuie de tout son poids sur cette pédale, son pied sera alors lui-même entraîné vers le haut, la jambe du conducteur pouvant alors subir d'autres dommages, en particulier au niveau du tibia entre la cheville et le genou.

On connaît également, par exemple des documents DE-A-4 409 235 ou DE-A-4 409 285, des dispositifs dans lesquels l'axe d'articulation entre la pédale et son support est retiré par un système de tringlerie, libérant ainsi la liaison mécanique entre la pédale et le tablierde . Une telle disposition a pour inconvénient une relative complexité de la tringlerie nécessaire, et un risque de mauvais fonctionnement si le conducteur appuie à ce moment de tout son poids sur cette pédale.

On connaît également du document WO-A-97/06036 un dispositif dans lequel la tige de commande est déformée pour désolidariser la pédale du servomoteur d'assistance pneumatique au freinage par un élément rigide pour réduire le risque de blessure du conducteur. Ce dispositif a pour inconvénient d'être de conception complexe.

La présente invention se situe dans ce contexte et a pour but de proposer un nouvel agencement de pédale qui évite toute transmission à la jambe ou au pied d'un conducteur d'un choc frontal ou oblique subi par le véhicule, de façon fiable tout en ne mettant en oeuvre que des moyens simples et peu onéreux.

A cette fin, l'invention propose un agencement de pédale pour un véhicule automobile, le véhicule comprenant un tablier de séparation entre un compartiment moteur et un habitacle pour le conducteur et les passagers, une traverse transversale sensiblement rigide à la flexion, un support de pédale solidaire du tablier du côté de l'habitacle, la pédale comportant un levier de pédale articulé par une de ses extrémités sur le support de pédale et comportant à son autre extrémité un patin d'actionnement, au moins un élément rigide de transmission de force étant articulé par une première de ses extrémités sur la traverse transversale, la deuxième extrémité de l'élément rigide de transmission de force s'étendant entre le support de pédale et le levier de la pédale, cf. agencement selon la figure 7 de WO-A-97/06 036.

Selon la présente invention, la deuxième extrémité de l'élément rigide de transmission de force comporte une butée coopérant directement avec le levier de la pédale pour l'éloigner d'un point fixe du support de pédale et le rapprocher du tablier lors d'une sollicitation du tablier vers l'arrière consécutive à un choc frontal du véhicule.

Grâce à cet arrangement, la butée de l'élément de transmission de force agit comme un coin inséré de force entre le levier de la pédale et le point fixe du support de pédale, pour effacer le levier et le patin du volume de l'habitacle où se trouvent normalement les pieds ou les jambes du conducteur du véhicule.

Selon un mode de réalisation possible de l'invention, la deuxième extrémité de l'élément rigide de transmission de force est formée avec une lumière oblongue susceptible de coopérer avec le point fixe du support de pédale.

Par exemple, le point fixe du support de pédale peut être constitué d'un pion solidaire du support de pédale.

Selon une disposition avantageuse, le point fixe détermine la position au repos de la pédale.

D'autres buts, caractéristiques et avantages de l'invention ressortiront clairement de la description qui en est faite ci-après, à titre indicatif et nullement limitatif, en référence aux dessins annexés, dans lesquels :

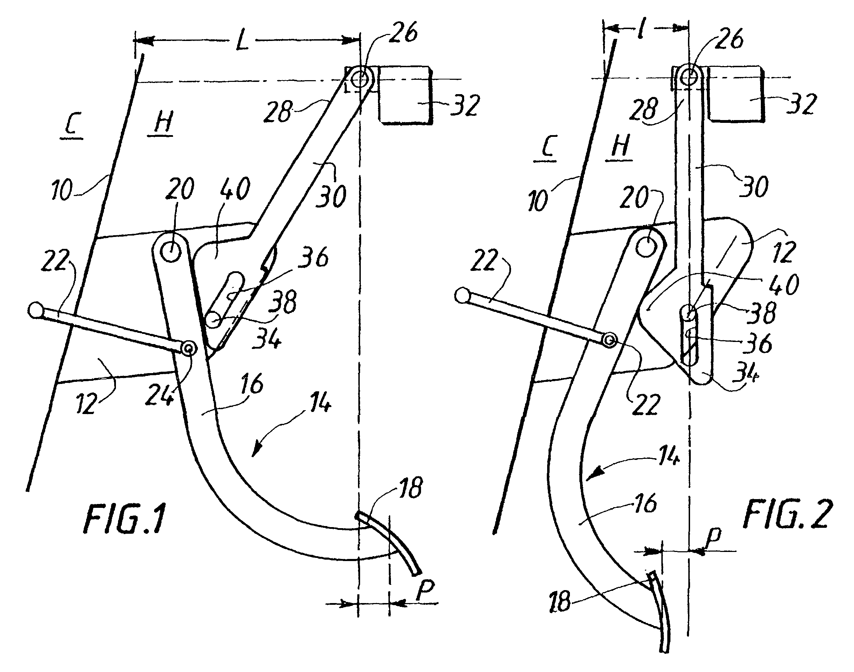

- La Figure 1 est une vue en coupe d'un agencement de pédale conforme à la présente invention, en position normale d'utilisation, et
- La Figure 2 est une vue en coupe de l'agencement de pédale de la Figure 1, après un choc frontal ou oblique subi par le véhicule.

On a représenté sur les Figures un tablier 10 de véhicule, séparant un compartiment moteur C d'un habitacle H pour le conducteur et les passagers du véhicule. Un support 12 de pédale est fixé de façon conventionnelle sur le tablier 10, et fait saillie dans l'habitacle H. Une pédale, désignée dans son ensemble par la référence 14, est constituée d'un levier 16 dont une extrémité comporte un patin 18 destiné à être actionné par le pied du conducteur du véhicule, et dont l'autre extrémité est articulée sur le support 12 par l'intermédiaire d'un pivot 20.

La pédale 14 est destinée à commander l'actionnement d'un des dispositifs dont le véhicule est équipé, comme par exemple un servomoteur pneumatique d'assistance au freinage ou un émetteur hydraulique d'embrayage. Pour ce faire, le levier 16 est articulé à une tige de commande 22 par l'intermédiaire d'un pivot 24.

Dans ces conditions, on comprend bien que si le véhicule subit un choc frontal ou oblique d'une force telle qu'elle puisse faire reculer le tablier 10 dans l'habitacle H, le tablier 10 fera également levier reculer la pédale 14 dans l'habitacle H, le patin 18 pouvant alors blesser la cheville ou la jambe du conducteur du véhicule.

Conformément à la présente invention, une telle éventualité peut être évitée. Dans ce but, on prévoit d'articuler, par l'intermédiaire d'un pivot 26, une extrémité 28 d'un élément rigide 30 de transmission de force ou poussoir sur une traverse transversale 32, sensiblement rigide à la flexion, constituée par exemple d'un profilé en forme de U, et située par exemple à la base du pare-brise de la grande majorité des véhicules, pour servir notamment de fixation du tableau de bord du véhicule.

L'autre extrémité 34 du poussoir 30 est formée avec une lumière oblongue 36 dans laquelle est reçu un pion 38 solidaire du support de pédale 12. L'extrémité 34 du poussoir 30 comporte également une partie 40 formant une butée ou une surface de came pour le levier 16.

En fonctionnement normal, le levier 16, sous l'effet de la sollicitation de divers ressorts (non représentés), est en position de repos à proximité de la butée 40. Le conducteur du véhicule peut alors actionner le dispositif relié à la tige de commande 22 en appuyant son pied sur le patin 18.

Si le véhicule subit un choc frontal ou oblique d'une force telle que le tablier 10 est amené à se déformer, une telle déformation se traduira la plupart du temps par un recul du tablier vers l'habitacle, par exemple d'une distance égale à (L - 1). Dans ce mouvement de recul, le poussoir 30 est entraîné en rotation autour du pivot 26 par le pion 38, solidaire du support de pédale 12 lui-même solidaire du tablier 10, la lumière oblongue 36 coulissant autour du pion 38.

La partie 40 du poussoir 30, forme une surface de came, et agit comme un coin inséré de force entre le pion 38 du support 12 de pédale et le levier 16 de la pédale, pour forcer ce dernier à pivoter autour de son axe 20, en éloignement du pion 38 et en rapprochement du tablier 10.

On voit donc bien que le levier 16 et le patin 18 de la pédale 14 se rapprochent du tablier 10, et qu'ils sont ainsi amenés dans une position de retrait où ils ne risquent pas de blesser la jambe ou la cheville du conducteur du véhicule. On voit même que le centre du patin 18, qui était situé avant le choc à une distance P en arrière de la traverse 32, est amené après le choc à une distance p en avant de cette même traverse 32, indéformable en flexion par hypothèse. Le patin 18 a donc avancé de distance (P + p) par rapport à la traverse 32, et donc par rapport au conducteur, maintenu à sa place par une ceinture de sécurité.

On voit également qu'il résulte de la rotation du levier 16 de la pédale 14 que le dispositif relié à la tige de commande 22 se trouve actionné automatiquement. Il en découle donc que même si le conducteur du véhicule appuyait de tout son poids sur le patin 18 à l'instant précédant le choc, il ne recevra aucun choc par l'intermédiaire du patin 18, mais il sentira au contraire le patin 18 s'enfoncer sous son pied.

Bien entendu, la présente invention n'est pas limitée au mode de réalisation qui a été décrit, mais elle est susceptible au contraire de recevoir de nombreuses variantes qui apparaîtront à l'homme du métier. C'est ainsi par exemple que l'extrémité du poussoir ou de l'élément de transmission de force qui coopère avec le de la pédale, de même que la forme de la lumière oblongue, pourront être conformés de toute façon convenable pour effacer le levier de pédale de façon plus ou moins progressive du volume de l'habitacle où se trouvent normalement les pieds ou les jambes du conducteur du véhicule. De même, on pourra prévoir que la lumière oblongue soit formée dans le support de pédale, le poussoir étant formé avec un pion coulissant dans cette lumière oblongue.

## Revendications

1. Agencement de pédale pour un véhicule automobile, le véhicule comprenant un tablier (10) de séparation entre un compartiment moteur ( C ) et un habitacle (H) pour le conducteur et les passagers, une traverse transversale (32) sensiblement rigide à la flexion, un support (12) de pédale (14) solidaire du tablier (10) du côté de l'habitacle (H), la pédale (14) comportant un levier (16) de pédale articulé par une de ses extrémités sur le support (12) de pédale et comportant à son autre extrémité un patin (18) d'actionnement, au moins un élément rigide (30) de transmission de force étant articulé par une première (28) de ses extrémités sur la traverse transversale (32), la deuxième extrémité (34) de l'élément rigide (30) de transmission de force s'étendant entre le support (12) de pédale et le levier (16) de la pédale (14) **caractérisé en ce que** ladite deuxième extrémité (34) comporte une butée (40) coopérant directement avec le levier (16) de la pédale (14) pour l'éloigner d'un point fixe (38) du support de pédale (12) et le rapprocher du tablier (10) lors d'une sollicitation du tablier (10) vers l'arrière consécutive à un choc frontal du véhicule.

2. Agencement de pédale selon la revendication 1, **caractérisé en ce que** la deuxième extrémité (34) de l'élément rigide (30) de transmission de force est formée avec une lumière oblongue (36) susceptible de coopérer avec le point fixe (38) du support (12) de pédale (14).

3. Agencement de pédale selon la revendication 2, **caractérisé en ce que** le point fixe (38) du support (12) de pédale (14) est constitué d'un pion (38) solidaire du support de pédale (14).

4. Agencement de pédale selon la revendication 3, **caractérisé en ce que** le point fixe (38) détermine la position au repos de la pédale (14).

## Patentansprüche

1. Pedalanordnung für ein Kraftfahrzeug, wobei das Fahrzeug eine Spritzwand (10) zur Trennung zwischen einem Motorraum (C) und einem Innenraum (H) für den Fahrer und die Passagiere aufweist sowie eine Quer-Traverse (32), die im wesentlichen biegesteif ist, einen Träger (12) für ein Pedal (14), der fest mit der Spritzwand (10) auf der Seite des Innenraums (H) befestigt ist, wobei das Pedal (14) einen Pedalhebel (16) aufweist, der an einem seiner Enden an dem Pedalträger (12) angelenkt ist und an seinem anderen Ende eine Betätigungsplatte (18) aufweist, wobei wenigstens ein starres Kraftübertragungselement (30) an einem ersten Ende (28) seiner beiden Enden an der Quertraverse (32) angelenkt ist, wobei das zweite Ende (34) des starren Kraftübertragungselements (30) sich zwischen dem Pedalträger (12) und dem Hebel (16) des Pedals (14) erstreckt, **dadurch gekennzeichnet, daß** das zweite Ende (34) einen Anschlag (40) aufweist, der direkt mit dem Hebel (16) des Pedals (14) zusammenwirkt, um ihn von einem feststehenden Punkt (38) des Pedalträgers (12) zu entfernen und an die Spritzwand (10) anzunähern, wenn die Spritzwand (10) nach einem Frontalaufprall des Fahrzeugs nach hinten beaufschlagt wird.

2. Pedalanordnung nach Anspruch 1, **dadurch gekennzeichnet, daß** das zweite Ende (34) des starren Kraftübertragungselementes (30) mit einer länglichen Öffnung (36) versehen ist, die mit dem feststehenden Punkt (38) des Trägers (12) des Pedals (14) zusammenwirken kann.

3. Pedalanordnung nach Anspruch 2, **dadurch gekennzeichnet, daß** der feststehende Punkt (38) des Trägers (12) des Pedals (14) durch einen Stift (38) gebildet ist, der fest mit dem Träger des Pedals (14) verbunden ist.

4. Pedalanordnung nach Anspruch 3, **dadurch gekennzeichnet, daß** der feststehende Punkt (38) die Ruhestellung des Pedals (14) bestimmt.

## Claims

1. Pedal arrangement for a motor vehicle, the vehicle comprising a bulkhead (10) forming a barrier between an engine compartment (C) and a passenger compartment (H) for the driver and the passengers, a transverse brace (32) which is more or less rigid in bending, a mount (12) for a pedal (14) secured to the bulkhead (10) on the passenger compartment (H) side, the pedal (14) comprising a pedal lever (16) articulated by one of its ends to the pedal mount (12) and at its other end comprising an operating shoe (18), at least one rigid force-transmission element (30) being articulated by a first (28) of its ends to the transverse brace (32), **characterized in that** the second end (34) of the rigid force-transmission element (30) extends between the pedal mount (12) and the lever (16) of the pedal (14) and comprises a stop (40) interacting directly with the lever (16) of the pedal (14) to move it away from a fixed point (38) of the pedal mount (12) and bring it closer to the bulkhead (10) when the bulkhead (10) is urged backwards as a result of a frontal impact to the vehicle.

2. Pedal arrangement according to- Claim 1, **characterized in that** the second end (34) of the rigid force-transmission element (30) is formed with an oblong slot (36) capable of interacting with the fixed point (38) of the mount (12) for the pedal (14).

3. Pedal arrangement according to Claim 2, **characterized in that** the fixed point (38) of the mount (12) for the pedal (14) consists of a stud (38) secured to the mount for the pedal (14).

4. Pedal arrangement according to Claim 3, **characterized in that** the fixed point (38) determines the position at rest of the pedal (14).
